# EUROPÄISCHE PATENTANMELDUNG

(11) **EP 2 100 651 A1**
(43) Veröffentlichungstag der Anmeldung: **16.09.2009**
(21) Anmeldenummer: 09001407.7
(22) Anmeldetag: 02.02.2009
(51) Int. Cl.: B01D 21/24, G05D 7/01, G05D 9/02

(54) **Klärbecken mit Auslasseinrichtung**

(30) Priorität: 04.03.2008 DE 202008003061 U
(71) Anmelder: ATB Umwelttechnologien GmbH, 32457 Porta Westfalica (DE)
(72) Erfinder: Baumann, Markus, 32547 Bad Oeynhausen (DE)
(74) Vertreter: Müller, Frank

(57) **Zusammenfassung**

Klärbecken mit Auslaßeinrichtung (10) für Klarwasser, welche Auslaßeinrichtung (10) im oberen Beckenbereich angeordnet ist und ein vorgeschaltetes Steigrohr (12) sowie einen Rohrstutzen (20) mit zumindest einer Ablauföffnung (28) umfaßt, der im wesentlichen horizontal durch eine Seitenwand (18) des Steigrohrs (12) geführt ist, **dadurch gekennzeichnet, dass** die Auslaßeinrichtung (10) einen in die Ablauföffnung (28) beweglich eingesetzten Stab (32) und mindestens einen im Steigrohr (12) angeordneten Schwimmkörper (36,38) umfaßt, welcher Stab (32) mit dem Schwimmkörper (36,38) derart verbunden ist, dass eine vertikale Bewegung des Schwimmkörpers (36,38) in eine lineare Bewegung des Stabs (32) entlang seiner Stabachse umgesetzt wird.

## Beschreibung

Die vorliegende Erfindung betrifft ein Klärbecken mit einer Auslaßeinrichtung für Klarwasser, gemäß dem Oberbegriff des Anspruchs 1.

Bei einem derartigen Klärbecken handelt es sich beispielsweise um die letzte Klärstufe einer Kleinkläranlage, nämlich die eigentliche Klärkammer, in der das vorgereinigte Abwasser einer biologischen Reinigung unterzogen wird. Hierbei wird der Inhalt der Klärkammer von Zeit zu Zeit belüftet und durchmischt. Die Anlage arbeitet als Durchlaufanlage mit gedrosseltem Ablauf. Zufließendes Wasser kann den Wasserstand anheben und wird über einen Ablauf mit kleinem Durchmesser in einem längeren Zeitraum aus der Anlage abgeführt.

Das entnommene Klarwasser soll praktisch frei von Schlammpartikeln sein. Um zu vermeiden, dass durch Turbulenzen im Klärbecken die Schlammkonzentration im Bereich der Klarwasserentnahme zu hoch wird, kann der Klarwasser-Auslaß ein vorgeschaltetes Steigrohr umfassen, in dessen oberen Bereich der Endabschnitt eines Rohrstutzes eingeführt ist, der sich im wesentlichen horizontal durch eine Seitenwand des Steigrohrs erstreckt. Der Endbereich des Rohrstutzens ist mit der eigentlichen Ablauföffnung versehen. Zum Erreichen der Ablauföffnung muß das Wasser zunächst am unteren Ende des Steigrohrs eintreten und in diesem aufsteigen. Das Steigrohr umschließt damit ein Volumen, in welchem sich der Belebtschlamm weitgehend ungestört von Turbulenzen absetzen kann. Zudem können die freien Strömungsquerschnitte der Ablauföffnung und des Steigrohrs so bemessen sein, dass die Aufstiegsgeschwindigkeit des Wassers im Steigrohr klein ist und damit niedriger als die Sinkgeschwindigkeit der im Wasser enthaltenen Schlammpartikel. Eine derartige Konstruktion ist in der europäischen Patentanmeldung 04 000 591 der Anmelderin beschrieben.

Damit die Abflußmenge gering gehalten wird, muß auch der freie Strömungsquerschnitt der Ablauföffnung entsprechend klein sein. In diesem Fall droht jedoch die Ablauföffnung durch Schlammpartikel, Algenbewuchs oder dergleichen zu verstopfen. In diesem Fall ist die einwandfreie Funktion der Kleinkläranlage nicht mehr gewährleistet.

Aufgabe der vorliegenden Erfindung ist es daher, ein Klärbecken der eingangs genannten Art zu schaffen, dessen Klarwasser-Auslaßeinrichtung derart ausgebildet ist, dass auch bei sehr kleinem freien Strömungsquerschnitt der Ablauföffnung das Klarwasser stets frei ablaufen kann. Insbesondere soll ein Verstopfen der Ablauföffnung vermieden werden.

Diese Aufgabe wird erfindungsgemäß durch ein Klärbecken mit den Merkmalen des Anspruchs 1 gelöst.

Die erfindungsgemäße Auslaßeinrichtung umfaßt einen beweglich in die Ablauföffnung eingesetzten Stab und mindestens einen Schwimmkörper, der im Steigrohr angeordnet ist und somit einem steigenden oder fallenden Wasserspiegel folgen kann. Der Stab ist mit dem Schwimmkörper derart verbunden, dass die vertikale Bewegung des Schwimmkörpers in eine lineare Bewegung des Stabs entlang seiner Achse innerhalb der Ablauföffnung umgesetzt wird.

Diese Kopplung der Bewegung des Schwimmkörpers mit dem Stab kann durch eine starre Verbindung erreicht werden, so dass der Stab der Aufwärts- und Abwärtsbewegung des Schwimmkörpers unmittelbar folgt, oder aber durch eine entsprechende Umlenkeinrichtung, die beispielsweise die vertikale Bewegung des Schwimmkörpers in eine horizontale Stabbewegung umsetzt. Diese mechanische Kopplung kann an die jeweiligen Gegebenheiten angepaßt werden, insbesondere an die Anordnung der Ablauföffnung am Rohrstutzen. Der Stab läßt sich dann wahlweise in eine Ablauföffnung in einer senkrechten Stirnwand des Rohrstutzens oder in der zylindrischen Seitenwand einsetzen und bewegt sich während des Hubs oder des Absinkens des Schwimmkörpers in die Ablauföffnung hinein oder aus dieser heraus.

Es versteht sich, dass der Außendurchmesser des Stabs zur Erhaltung eines verbleibenden freien Strömungsquerschnitts etwas geringer bemessen sein muß als der Durchmesser der Ablauföffnung selbst. Das Klarwasser kann dann durch den ringförmigen Zwischenraum zwischen der Außenfläche des Stabs und dem Rand der Ablauföffnung in den Rohrstutzen und nach außen abströmen. Durch die ständige Bewegung des Stabs können sich keine Partikel und kein Algen- oder Pflanzenbewuchs im Bereich der Ablauföffnung festsetzen. Ein dauerhaftes Verstopfen der Öffnung wird damit zuverlässig während des Betriebs der Kleinkläranlage verhindert, ohne dass die Auslaßeinrichtung gewartet und gesäubert werden muß.

Vorzugsweise weist der Stab eine strukturierte Oberfläche auf.

Das bedeutet, dass die Oberfläche des Stabs nicht glatt, sondern auf geeignete Weise profiliert, aufgerauht oder dergleichen ist. Denkbar ist z.B. die Verwendung einer Gewindestange, oder einer Anbringung einer Riffelung auf der Staboberfläche. Diese Maßnahmen tragen dazu bei, die Reinigungswirkung während der vertikalen Bewegung des Stabs zu verbessern.

In einer weiteren bevorzugten Ausführungsform verjüngt sich der Querschnitt des Stabs von einem zum anderen Ende hin.

Dies hat zur Folge, dass der verbleibende freie Strömungsquerschnitt zwischen dem Stab und dem Rand der Ablauföffnung je nach Position des Stabs variabel ist. Verjüngt sich der Stab beispielsweise von seinem in die Ablauföffnung weisenden Ende her zu seinem aus der Ablauföffnung herausragenden Ende und wird etwa durch eine Hubbewegung des Schwimmkörpers, der einen steigenden Wasserspiegel im Steigrohr folgt, aus der Öffnung heraus bewegt, verringert sich der verbleibende Strömungsquerschnitt. Dies kann erwünscht sein, um einen zunehmenden statischen Wasserdruck auf die Ablauföffnung auszugleichen, der entsteht, wenn der Wasserspiegel um den Rohrstutzen herum auf ein Niveau oberhalb der Ablauföffnung ansteigt. Auf diese Weise bleibt die Ablaufmenge auch bei unterschiedlichen Aufstauhöhen oberhalb der Ablauföffnung weitgehend konstant. Zur Erreichung dieses Effekts kann die Richtung der Verjüngungsrichtung des Stabs und seine Bewegungsrichtung bei steigendem Wasserspiegel natürlich auch umgekehrt werden.

In einer weiteren bevorzugten Ausführungsform ist die Ablauföffnung an der Unterseite eines innerhalb des Steigrohrs gelegenen Endabschnitts des Rohrstutzens in dessen Umfangswand angeordnet, und der Stab ist im wesentlichen senkrecht ausgerichtet und innerhalb der Ablauföffnung vertikal beweglich.

In diesem Fall besteht beispielsweise die Möglichkeit, den Schwimmkörper fest am Stab anzubringen, so dass der Stab einer Hub- oder Sinkbewegung des Schwimmkörpers unmittelbar folgt.

Vorzugsweise ist an der Oberseite des Endabschnitts des Rohrstutzens eine der Ablauföffnung gegenüberliegende Überlauföffnung angeordnet, und sowohl die Ablauföffnung als auch die Überlauföffnung werden vom Stab durchquert.

Die Überlauföffnung an der Oberseite des Rohrstutzens dient als Notüberlauf für den Havariefall. Erreicht der Wasserspiegel die Überlauföffnung, kann das Wasser sowohl durch die untere Ablauföffnung als auch durch die obere Überlauföffnung hindurchströmen, so dass ein zu hoher Aufstau vermieden wird. Da der Stab beide Öffnungen durchquert, wird auch eine Verstopfung der Überlauföffnung vermieden. Die Überlauföffnung kann einen größeren Querschnitt aufweisen als die Ablauföffnung. Dies muß jedoch nicht notwendigerweise der Fall sein.

Vorzugsweise ist der Stab an seinem oberen Ende mit einem horizontalen Joch verbunden, an dem der Schwimmkörper befestigt ist.

Der Schwimmkörper kann beispielsweise seitlich am Joch neben dem Rohrstutzen angebracht sein und sich vom Joch abwärts erstrecken, so dass er auf einer geeigneten Höhe in Bezug auf die Ablauföffnung bzw. den Wasserspiegel angeordnet werden kann. Fällt der Wasserspiegel im Steigrohr zu weit, legt sich das Joch auf die Oberseite des Rohrstutzens. So kann verhindert werden, dass der Stab bei niedrigen Wasserständen nach unten aus der Ablauföffnung herausgleitet.

In einer bevorzugten Ausführungsform ist an beiden Enden des Jochs jeweils ein Schwimmkörper angebracht.

Vorzugsweise sind diese beiden Schwimmkörper zu beiden Seiten des Endabschnitts des Rohrstutzens angeordnet und bilden zusammen mit dem Joch einen U-förmigen Querschnitt.

In einer weiteren bevorzugten Ausführungsform steht der Strömungsquerschnitt der Ablauföffnung bei darin eingesetztem Stab zu dem Strömungsquerschnitt des Steigrohrs in einem solchen Verhältnis, dass die Aufstiegsgeschwindigkeit des Wassers im Steigrohr niedriger ist als die Sinkgeschwindigkeit der im Wasser enthaltenen Schlammpartikel.

Im folgenden wird eine bevorzugte Ausführungsform der Erfindung anhand der Zeichnungen näher erläutert.
- Fig. 1: zeigt einen vertikalen Längsschnitt durch die Auslaßein- richtung eines erfindungsgemäßen Klärbeckens;
- Fig. 2: zeigt einen vertikalen Schnitt durch den oberen Bereich der Auslaßeinrichtung aus Fig. 1, bei welchem die Schnittebene senkrecht zu derjenigen in Fig. 1 steht;
- Fig. 3: ist ein horizontaler Schnitt durch einen inneren Teil der Aus- laßeinrichtung aus den Fig. 1 und 2; und
- Fig. 4: zeigt eine Draufsicht auf die erfindungsgemäße Auslaßein- richtung.

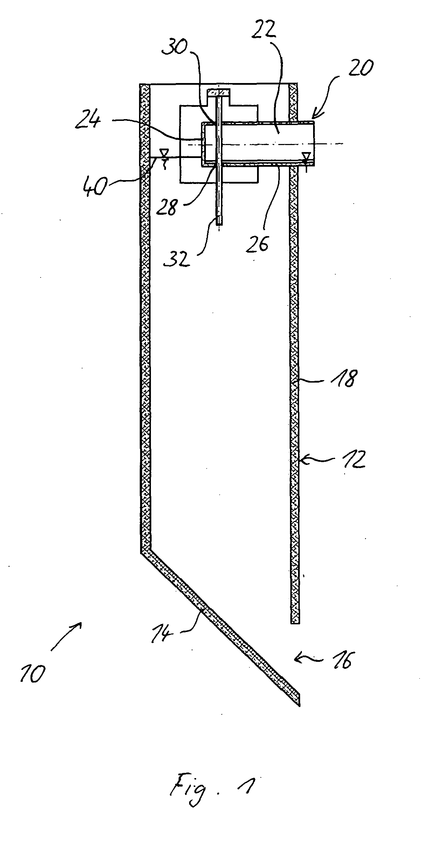

Die in Fig. 1 dargestellte Auslaßeinrichtung 10 ist zur Anbringung im oberen Bereich eines hier nicht näher dargestellten Klärbeckens einer Kleinkläranlage vorgesehen. In einer solchen Kleinkläranlage, wie sie beispielsweise in der europäischen Patentanmeldung 04 000 591 der Anmelderin beschrieben wird, findet eine biologische Abwasserklärung statt. Nachdem das Abwasser in einer Vorklärkammer von Grobstoffen gereinigt worden ist, wird es in die eigentliche Klärkammer überführt, in der sich Belebtschlamm befindet. Für den Sauerstoffeintrag sind in der Regel Lüftungseinrichtungen in der Klärkammer vorhanden. Die Anlage wird hier intermittierend belüftet, das heißt, Belüftungsphasen werden durch Pausen unterbrochen.

Die Auslaßeinrichtung umfaßt ein vertikales Steigrohr 12, in welchem eine Abtrennung des Schlamms vom gereinigten Wasser stattfindet und in dessen oberen Bereich ein Auslaß angeordnet ist. Im oberen Bereich weist das Steigrohr 12 einen im wesentlichen zylindrischen Querschnitt auf. An seinem oberen Ende ist das Steigrohr 12 offen, und sein unteres Ende ist durch einen gegenüber der Horizontalen geneigten Boden 14 weitgehend verschlossen. Lediglich in dem Randbereich 16, der das untere Ende des Steigrohrs 12 darstellt, befindet sich eine Öffnung 16 in der zylindrischen Seitenwand 18. Durch diese Öffnung 16 kann das in dem Klärbecken enthaltene Wasser in das Steigrohr 12 eindringen und in diesem aufsteigen.

Am oberen Ende des Steigrohrs 12 ist ein weitgehend horizontaler Rohrstutzen 20 durch die zylindrische Seitenwand 18 geführt, so dass der zum Steigrohr 12 gewandte Endabschnitt 22 des Rohrabschnitts 20 innerhalb des Volumens des Steigrohrs 12 gelegen ist und von der Rohrwand 18 umschlossen wird. An der im Steigrohr 12 gelegenen Stirnseite 24 ist der Rohrstutzen 20 verschlossen. Das außerhalb des Steigrohrs 12 befindliche freie Ende des Rohrstutzens 20 ist mit dem Ablauf der Kläranlage verbunden.

An seiner Unterseite, d.h. im unteren Bereich der zylindrischen Umfangswand 26 des Endabschnitts 22 des Rohrstutzens 20 ist eine Ablauföffnung 28 angeordnet, durch welche Klarwasser, das im Steigrohr 20 aufgestiegen ist, in den Rohrstutzen 20 eindringen und seitlich zum Außenbereich abfließen kann. Ferner ist auf der Oberseite des Rohrstutzens 20 im oberen Bereich der Umfangswand 26 eine Überlauföffnung 30 angeordnet, deren Durchmesser etwas größer bemessen ist als derjenige der Ablauföffnung 28. Ein senkrechter Stab 32 ist derart in den Endabschnitt 22 des Rohrstutzens 20 eingesetzt, dass er sowohl die Überlauföffnung 30 als auch die Ablauföffnung 28 durchquert und an seinem unteren Ende aus der Ablauföffnung 28 herausragt.

Die Überlauföffnung 30 dient lediglich als Notablauf für den Havariefall. Steigt der Wasserspiegel über das Niveau der Ablauföffnung 28 und kann diese das Klarwasser nicht mehr in ausreichendem Maße abführen, wird bei Erreichen der Überlauföffnung 30 zusätzlich Wasser in den Rohrstutzen 20 eintreten, so dass ein weiteres Ansteigen des Pegels zuverlässig verhindert wird.

Der Außenquerschnitt des Stabs 32 ist in Bezug auf die Größe der Ablauföffnung 28 so bemessen, dass der ringförmige freie Strömungsquerschnitt zwischen der Außenoberfläche des Stabs 32 und dem Rand der Ablauföffnung 28 groß genug ist, um eine zuverlässige Abförderung des Klarwassers im Normalbetrieb der Kleinkläranlage zu gewährleisten. Bei eingesetztem Stab 32 ist der verbleibende Strömungsquerschnitt der Ablauföffnung 28 vorteilhafterweise in ein solches Verhältnis zum Strömungsquerschnitt des Steigrohrs 12 zu setzen, das die Aufstiegsgeschwindigkeit des Wassers im Steigrohr 12 niedriger ist als die Sinkgeschwindigkeit der im Wasser enthaltenen Schlammpartikel. Durch eine entsprechende Anpassung der Volumenströme durch den Querschnitt des Steigrohrs 12 und durch die Ablauföffnung 28 mit eingesetztem Stab 32 läßt sich somit erreichen, dass die Aufstiegsgeschwindigkeit der Wassersäule im Steigrohr 12 in Bezug auf die Absinkgeschwindigkeit der Stammpartikel gering ist und sich praktisch keine Schlammpartikel mehr im Bereich der Ablauföffnung 28 befinden. Das Steigrohr 12 bietet ferner einen weitgehend geschlossenen Raum, der vor Turbulenzen im Klärbecken geschützt ist. Die Wassersäule kann sich innerhalb des Steigrohrs 12 beruhigen, so dass die Schlammpartikel auf den geneigten Boden 14 absinken und das Steigrohr 12 durch seine untere Öffnung 16 verlassen.

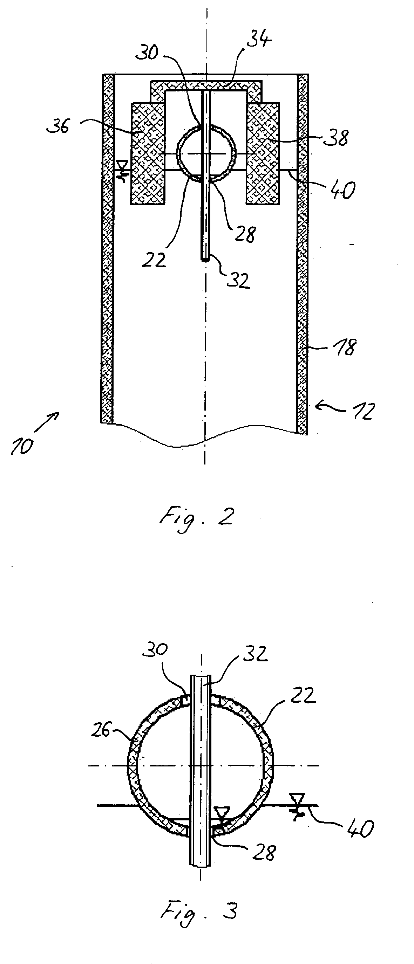

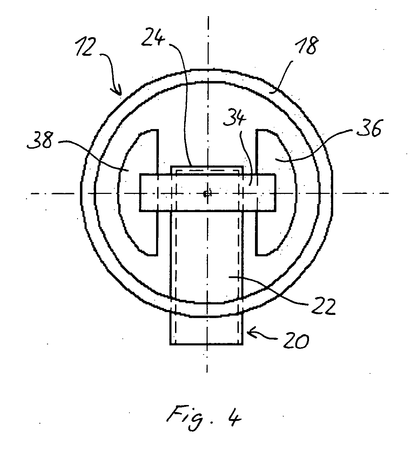

Am oberen Ende des senkrechten Stabs 32, das aus der Überlauföffnung 30 herausragt, ist ein horizontales Joch 34 in Form eines Querbalkens angeordnet, das insbesondere in Fig. 2 und in der Draufsicht in Fig. 4 deutlich zu erkennen ist. Die Enden des Jochs 34 tragen jeweils einen Schwimmkörper 36 und 38. Die beiden Schwimmkörper 36 und 38 erstrecken sich vom Joch 34 aus nach unten und sind somit zu beiden Seiten des Endabschnitts 22 des Rohrstutzens 20 angeordnet. Zusammen mit dem Joch 34 bilden sie einen U-förmigen Querschnitt, dessen Schenkel den Endabschnitt 22 seitlich einfassen. Die unteren Enden der Schwimmkörper 36,38 liegen, wie in den Fig. 1 und 2 dargestellt, unterhalb der Höhe der Ablauföffnung 28.

Steigt der Wasserspiegel auf das Niveau der Schwimmkörper 36,38, so werden diese leicht angehoben und bewegen den senkrechten Stab 32 innerhalb der Ablauföffnung 28 und der Überlauföffnung 30 aufwärts. Durch diese Bewegung können Partikel, die sich im Bereich der Öffnungen, insbesondere an der Ablauföffnung 28 angesetzt haben, lösen. Hierdurch wird ein Verstopfen der Ablauföffnung 28 vermieden. Sinkt umgekehrt der Wasserspiegel, findet eine leichte Abwärtsbewegung der Schwimmkörper 36,38 statt, und der Stab 32 bewegt sich durch die Öffnungen 28,30 nach unten. Schwankungen des Wasserspiegels 40 am oberen Endbereich des Steigrohrs 12 werden somit genutzt, um den Stab 32 in den Öffnungen 28,30 zu bewegen und diese von Verstopfungen frei zu halten.

Bei starkem Absinken des Wasserspiegels im Steigrohr 12 legt sich das Joch 34 auf die Oberseite des Rohrstutzens 20 auf und verhindert so ein Herausgleiten des Stabs 32 aus den Öffnungen 28,30.

Zur Verbesserung der Reinigungswirkung kann der Stab 32 eine strukturierte, d.h. profilierte oder aufgerauhte Oberfläche aufweisen, die die Öffnungen 28,30 zuverlässiger von Verstopfungen frei hält als eine glatte Oberfläche des Stabs 32. Beispielsweise kann es sich bei dem Stab 32 um eine Gewindestange handeln.

Fig. 3 zeigt eine Detailansicht von Fig. 2, in welcher die Verhältnisse der Wasserstände außerhalb des Rohrstutzens 20 im Steigrohr 12 und im Rohrstutzen 20 dargestellt werden. Es ist für den Betrieb der Kleinkläranlage ausreichend, wenn nur sehr kleine Klarwasser-Mengen durch die Ablauföffnung 28 abfließen können. Steigt der Wasserspiegel 40 im Steigrohr 12, kann die Ablauföffnung 28 geringfügig überstaut werden. Hierbei nimmt die Höhe des statischen Wasserdrucks auf die Ablauföffnung 28 mit steigendem Wasserspiegel 40 zu, und damit steigt auch der Durchfluß durch die Ablauföffnung 28. Dies kann durch eine konische Ausbildung des Stabs 32 ausgeglichen werden, bei welcher sich der Stab 32 von seinem unteren Ende her nach oben verjüngt. Der freie Strömungsquerschnitt der Ablauföffnung 32 ist damit abhängig von der vertikalen Position des Stabs 32. Je weiter der Stab 32 nach oben bewegt wird, was bei steigendem Wasserspiegel 40 der Fall ist, desto weiter wird der ringförmige freie Strömungsquerschnitt der Ablauföffnung 28 verschlossen, so dass der zunehmende statische Wasserdruck durch Verkleinern der Ablauföffnung 28 ausgeglichen wird. Auf diese Weise kann erreicht werden, dass unabhängig von der Aufstauhöhe im Umgebungsbereich des Rohrstutzens 20 ein etwa gleichmäßiger Klarwasserablauf erzielt wird.

Die Draufsicht in Fig. 4 zeigt insbesondere die Schwimmkörper 36,38 von oben, die an ihren dem Rohrstutzen 20 zugewandten Innenseiten abgeflacht und an ihren Außenseiten gewölbt sind. Durch ausreichende Abstände von der Umfangswand 26 des Rohrstutzens 20 und von der Wand 18 des Steigrohrs 12 wird eine freie Beweglichkeit der Schwimmkörper 36,38 gewährleistet, so dass diese leicht dem Wasserspiegel 40 im Steigrohr 12 folgen können.

Es ist im übrigen ohne weiteres möglich, den Endabschnitt des Rohrstutzens 20 innen mit einer Einrichtung zur Messung des Wasserstands zu versehen. Diese kann beispielsweise durch einen Fühler oder Schalter gebildet werden, der eine Bewegung oder die aktuelle Position des Stabs 32 bestimmt und ein entsprechendes Signal nach außen zu einer entsprechenden Datenverarbeitungseinrichtung abgibt. Der Fühler oder Schalter kann zu diesem Zweck in die Stirnwand 24 des Rohrstutzens 20 eingesetzt sein, so dass er sich in unmittelbarer Nähe des Stabs 32 befindet. Auf diese Weise hat die vorstehend beschriebene Anordnung aus Schwimmkörper 36,38 und Stab 32 außer der Reinigungsfunktion ferner eine Meßfunktion für den Wasserstand im Ablauf des Klärbeckens.

## Patentansprüche

1. Klärbecken mit Auslaßeinrichtung (10) für Klarwasser, welche Auslaßeinrichtung (10) im oberen Beckenbereich angeordnet ist und ein vorgeschaltetes Steigrohr (12) sowie einen Rohrstutzen (20) mit zumindest einer Ablauföffnung (28) umfaßt, der im wesentlichen horizontal durch eine Seitenwand (18) des Steigrohrs (12) geführt ist, **dadurch gekennzeichnet, dass** die Auslaßeinrichtung (10) einen in die Ablauföffnung (28) beweglich eingesetzten Stab (32) und mindestens einen im Steigrohr (12) angeordneten Schwimmkörper (36,38) umfaßt, welcher Stab (32) mit dem Schwimmkörper (36,38) derart verbunden ist, dass eine vertikale Bewegung des Schwimmkörpers (36,38) in eine lineare Bewegung des Stabs (32) entlang seiner Stabachse umgesetzt wird.

2. Klärbecken gemäß Anspruch 1, **dadurch gekennzeichnet, dass** der Stab (32) eine strukturierte Oberfläche aufweist.

3. Klärbecken gemäß Anspruch 1 oder 2, **dadurch gekennzeichnet, dass** sich der Querschnitt des Stabs (32) von einem zum anderen Ende verjüngt.

4. Klärbecken gemäß einem der vorhergehenden Ansprüche, **dadurch gekennzeichnet, dass** die Ablauföffnung (28) an der Unterseite eines innerhalb des Steigrohrs (12) gelegenen Endabschnitts (22) des Rohrstutzens (20) in dessen Umfangswand (26) angeordnet ist, und dass der Stab (32) im wesentlichen senkrecht angeordnet ist und in die Ablauföffnung (28) vertikal beweglich eingesetzt ist.

5. Klärbecken gemäß Anspruch 4, **dadurch gekennzeichnet, dass** an der Oberseite des Endabschnitts (22) des Rohrstutzens (20) eine der Ablauföffnung (28) gegenüberliegende Überlauföffnung (30) angeordnet ist, und dass sowohl die Ablauföffnung (28) als auch die Überlauföffnung (30) vom Stab (32) durchquert wird.

6. Klärbecken gemäß Anspruch 5, **dadurch gekennzeichnet, dass** der Stab (32) an seinem oberen Ende mit einem horizontalen Joch (34) verbunden ist, an dem mindestens ein Schwimmkörper (36,38) befestigt ist.

7. Klärbecken gemäß Anspruch 6, **dadurch gekennzeichnet, dass** an den beiden Enden des Jochs (34) jeweils ein Schwimmkörper (36,38) angebracht ist.

8. Klärbecken gemäß Anspruch 7, **dadurch gekennzeichnet, dass** die beiden Schwimmkörper (36,38) zu beiden Seiten des Endabschnitts (22) des Rohrstutzens (20) angeordnet sind und zusammen mit dem Joch (34) einen U-förmigen Querschnitt bilden.

9. Klärbecken gemäß einem der vorhergehenden Ansprüche, **dadurch gekennzeichnet, dass** der Strömungsquerschnitt der Ablauföffnung (28) bei darin eingesetztem Stab (32) zu dem Strömungsquerschnitt des Steigrohres (12) in einem solchen Verhältnis steht, dass die Aufstiegsgeschwindigkeit des Wassers im Steigrohr (12) niedriger ist als die Sinkgeschwindigkeit der im Wasser enthaltenen Schlammpartikel.
